# EUROPEAN PATENT SPECIFICATION

(11) **EP 3 781 291 B1**
(45) Date of publication and mention of the grant of the patent: **07.09.2022**
(21) Application number: 19717455.0
(22) Date of filing: 05.04.2019
(51) Int. Cl.: B01D 53/047, B01D 53/04, F16K 25/00

(54) **A PRESSURE SWING ADSORPTION SYSTEM**
EIN DRUCKWECHSEL-ADSORPTIONSSYSTEM
SYSTEME D'ADSORPTION PAR MODULATION DE PRESSION

(30) Priority: 16.04.2018 GB 201806197; 22.03.2019 GB 201903937
(43) Date of publication of application: 24.02.2021
(73) Proprietor: Parker Hannifin EMEA S.à.r.l., 1163 Etoy (CH)
(72) Inventor: GRAHAM, Michael, Northumberland NE23 3YT (GB)
(74) Representative: Byworth, Ian James
(86) International application number: PCT/EP2019/058719
(87) International publication number: WO 2019/201631

(56) References cited:
- EP-A2- 0 099 591
- EP-A2- 0 266 884
- EP-B1- 1 481 641
- EP-B1- 1 497 012
- GB-A- 1 444 231
- US-A- 3 280 835
- US-A- 4 479 815
- US-A- 5 344 474
- US-A- 5 983 516
- US-A1- 2012 168 653
- US-B1- 6 176 897
- Fisher: "FISHER 3570 PNEUMATIC VALVE POSITIONERS: INSTRUCTION MANUAL D2000137X012", , 31 August 2018 (2018-08-31), pages 1-32, XP055606698, Retrieved from the Internet: URL:https://www.emerson.com/documents/auto mation/instruction-manual-fisher-3570-pneu matic-valve-positioners-en-124054.pdf [retrieved on 2019-07-18]

## Description

The invention relates to a pressure swing adsorption system having a pathway between its adsorption chambers which facilitates re-pressurisation of a regenerating chamber with fluid from an online chamber after regeneration of the adsorption medium in the regenerating chamber by desorption of adsorbed material.

Pressure swing adsorption systems are used to treat a fluid such as a gas or a liquid by removing a component from the fluid. Such systems include first and second chambers, each containing an adsorption medium, in which a fluid can be directed to flow over the adsorption medium in one of the chambers while the adsorption medium in the other of the chambers is regenerated by desorption of adsorbed components of the fluid. The chambers of a pressure swing adsorption system are frequently referred to as columns. They are often elongate with an identifiable axis. Columns which are not necessarily elongate, or which do not have an identifiable axis might be used.

The chambers of a pressure swing adsorption system are switched between online and regeneration modes when the ability of the adsorption medium in the online chamber to adsorb more contaminants is reduced below a threshold. A small portion of the fluid which has passed over the adsorption medium in the online chamber is supplied to the regenerating chamber through a purge conduit or line to cause contaminants which have been adsorbed by the adsorption medium to be desorbed. That portion of the fluid (the "purge fluid") is discharged from the system through an exhaust. The exhaust is closed when the adsorbent material in the regenerating chamber has been regenerated.

The pressure in an online chamber will usually be higher than the pressure in a regenerating chamber. It is desirable that the pressure in a chamber in which the adsorption medium has been regenerated is increased towards the pressure within it when online (the "system pressure") before the functions of the chambers are switched.

A chamber which is offline for regeneration can be re-pressurised using fluid from the online chamber prior to being switched to being online. Re-pressurisation of the chamber has the advantage that loss of energy used to pressurise the chambers is minimised when the chambers are switched.

It is not practical to rely on the purge line for re-pressurisation of a regenerated chamber because a flow restrictor in the purge line means that the time taken to re-pressurise the regenerated chamber in this way is too long.

A re-pressurisation pathway can be provided between the chambers so that fluid can flow from an online chamber to a chamber which has been regenerated quickly. The flow of fluid through a re-pressurisation pathway can be controlled by a valve. For example, a pilot operated valve can be provided which, in an open position, allows flow of fluid between the chambers, bypassing the purge line, and which, in a closed position, closes the re-pressurisation pathway so that the only path for fluid to flow between the chambers is through the purge line. A pressure swing adsorption system having these features is disclosed in International patent application no. PCT/GB2018/050814, and in UK patent application no. 1705122.8 and patent applications which claim priority from that application. Subject matter disclosed in each of those applications is incorporated in this application by this reference.

EP1497012 describes a pressure swing adsorption apparatus having two absorber units linked by a purge circuit and an equalising flow path.

US4479815 describes a pneumatic controller for absorbent fractioners such as desiccant driers.

According to the present disclosure, there is provided a pressure swing adsorption system comprising the features of claim 1.

The present invention provides a pressure swing adsorption system in which a re-pressurisation control valve for controlling the flow of fluid in a re-pressurisation pathway comprises a housing having a cavity within it with a port for flow of fluid along the re-pressurisation pathway and a valve member which can move in the cavity between (i) a closed position in which the valve member engages the port and restricts flow of fluid through the re-pressurisation pathway and (ii) an open position in which the valve member is displaced from the port allowing flow of fluid through the re-pressurisation pathway, the valve member being biased towards its closed position by the action on the valve member directly or indirectly of fluid from the online chamber. An actuator acts on the valve member to move it from its closed position.

The essential technical features of the system of the present invention are explicitly defined in the wording of the independent claim 1. Additional technical features of the present invention are explicitly defined in the wordings of dependent claims 2-15.

The invention therefore provides a pressure swing adsorption system which includes first and second chambers, each containing an adsorption medium, in which when the system is in use a fluid is directed to flow over the adsorption medium in one of the chambers (the "online chamber") in order to adsorb contaminants in the fluid while the adsorption medium in the other of the chambers is regenerated by desorption of adsorbed contaminants (the "regenerating chamber"), the system including:
a. a purge conduit which extends between the first and second chambers for delivering fluid when the system is in use from the online chamber to the regenerating chamber, the purge conduit containing a flow restrictor for controlling the volume of fluid which can flow through the purge conduit when the system is in use,
b. a re-pressurisation pathway which extends between the first and second chambers for delivering fluid when the system is in use from the online chamber to the regenerating chamber, bypassing the flow restrictor in the purge conduit,
c. a re-pressurisation control valve for controlling the flow of fluid in the re-pressurisation pathway, which comprises a housing having a cavity within it with a port for flow of fluid along the re-pressurisation pathway and a valve member which can move in the cavity between (i) a closed position in which the valve member engages the port and restricts flow of fluid through the re-pressurisation pathway and (ii) an open position in which the valve member is displaced from the port allowing flow of fluid through the re-pressurisation pathway, the valve member being biased towards its closed position by the action on the valve member directly or indirectly of fluid from the online chamber, and
d. an actuator which can act on the valve member to move it from its closed position.

The system can help to reduce the time taken to transfer pressurised fluid from the chamber which has been operating online to the chamber which has been regenerated by desorption of adsorbed components of a fluid. This can help operating efficiency by reducing loss of energy caused by the switching of the chambers between online and regeneration phase parts of the operating cycle. It can also help to reduce the likelihood of disturbance of the adsorption medium in a chamber which has been regenerated as a result of sudden exposure to system pressure.

The actuator can be actuated selectively to provide control over the re-pressurisation control valve with a view to ensuring that it is only open in that part of the operating cycle of the system in which it is desired to allow pressurised fluid to flow quickly between the chambers of the system. The actuator might include an element which contacts the valve member physically to cause it to move. However other forms of actuator might be used, for example which operate magnetically (including electromagnetically), or hydraulically or pneumatically.

Optionally, the valve member is provided integrally with the actuator. The valve member and actuator may be separate parts of a single or unitary body which defines the valve member and the actuator. Optionally, the valve member is provided separately from the actuator, and may be connected to the actuator. The valve member and the actuator may be separate parts or components. The valve member and actuator may be connected by a mechanical connection such as a bolt or other threaded connection. The actuator may serve for moving the valve member between its open position and its closed position. The actuator may serve for moving the valve member between its closed position and its open position. Movement of the valve member from its closed position to its open position, and/or from its open position to its closed position, may be effected, at least in part, by the action of fluid from the online chamber.

Optionally, the actuator includes a piston, and a bore in which the piston can slide between a retracted position which it occupies when the valve member is in its open position, and an extended position in which it causes the valve member to engage the port. Movement of the piston to the retracted position may cause the valve member to be displaced from the port. Movement of the piston to the extended position may cause the valve member to engage the port. The piston may also define the valve member. The housing may comprise a plurality of ports through which fluid may flow along the re-pressurisation pathway. The piston may be arranged so that, in its extended position, the piston engages both of the ports to restrict flow along the re-pressurisation pathway.

The piston may comprise a part defining the actuator, which may be a first part. The piston may comprise a part defining the valve member, which may be a second part. The first part may have or may describe a first diameter, and the second part may have or may describe a second diameter, which may be less than the first diameter. This may serve to generate a differential pressure force between a piston face defined by the first part of the piston and a piston face defined by the second part of the piston, which may assist in moving the piston between a position in which the valve member is in its open position, and a position in which the valve member is in its closed position. The first part of the piston may carry a first seal, and the second part of the piston may carry a second seal. The first and second seals may at least partly define the first and second piston faces. A portion of the second part of the piston may define a valve face, and the housing may define a valve seat, the valve face of the piston adapted to sealingly abut the valve seat when the valve member is in its closed position. The valve face may be out of sealing contact with the valve seat when the valve member is in its open position. The valve seat may surround the housing port. Where there are a plurality of ports, the valve seat may surround both of the ports.

Optionally, the actuator includes a piston, and a bore in which the piston can slide between a retracted position which it occupies when the valve member is in its closed position and an extended position in which it engages the valve member to displace it from the port.

Optionally, the axis on which the piston slides between its retracted and extended positions can be aligned with the axis which is defined by the port. For example, the piston can be provided in a channel which is aligned with the port, and which will frequently communicate with the port. Alignment of the piston axis with the port has the advantage that it enables the size of the valve to be reduced compared with a valve in which the angle between the piston axis and the port axis is greater than zero degrees.

Optionally, the angle between the axis on which the piston slides between its retracted and extended positions and the axis which is defined by the port is greater than zero. For example, the angle might be at least about 75°, for example about 90°.

Optionally, the actuator includes a channel for supply of a first pilot stream of fluid to the piston to cause the piston to be displaced from its retracted position towards its extended position.

Optionally, the surface area of the piston which is acted on by the pilot stream is greater than the surface area of the piston which is acted on by the fluid in the housing cavity. For example, the piston can include a flange which is acted on by the pilot stream. These features can help to ensure that the force that is exerted by the piston on the valve member is sufficient to displace it, notwithstanding the force that is applied to the piston by the fluid in the housing cavity.

It can be preferred that the actuator includes a channel for supply of a second pilot stream of fluid to the piston to cause the piston to be displaced from its extended position towards its retracted position. Exposure of the piston to a second pilot stream of fluid can help to ensure that the piston is displaced towards its retracted position in the absence of force applied to the piston by fluid of the first pilot stream, reinforcing the force that is applied to the piston by fluid in the housing cavity.

Frequently, the valve member is an approximately spherical body. This has the advantage that the valve member can form a seal with the port in the housing irrespective of the orientation of the valve member when the port is circular.

Optionally, the surface of the valve member is formed from a resiliently deformable material. This has the advantage of promoting the formation of a fluid tight seal when the valve member is pressed against an appropriately shaped seat provided by the port. The valve member can have a surface layer formed from a resiliently deformable material, with the remainder of the valve member being formed from one or more other materials (or being hollow), or the whole of the valve member can be formed from a resiliently deformable material. This can be preferred for ease of construction and cost. The choice of material will depend on factors such as the application for the system, the materials with which the valve member will come into contact when in use, the conditions (temperature, operating pressure and the like) to which the valve member will be exposed when in use, and so on. Polymeric materials and rubbers will be useful for many applications. An example of a suitable rubber might be an acrylonitrile-butadiene rubber. A suitable material can have a hardness measured on the Shore A scale of 90.

It can be preferred that the port provides a seat for engagement by the valve member which has a conical surface. The wall of a suitable conical surface can be defined by straight lines when the port is viewed in cross-section. A seal can be formed along a circular line of contact between a conical surface on the port and a valve member provided by a spherical body.

The formation of a seat can be further promoted by shaping the seat so that it defines a continuous edge or ridge extending around the seat, which presses into the surface of the valve member and deforms it locally.

The use of a valve member whose surface is formed from a resiliently deformable material has the advantage of allowing convenient servicing of the control valve, simply by replacing the valve member. This can be contrasted with servicing a valve in which seals are formed using O-rings.

It is envisaged that the cavity in the housing might have first and second ports for the valve member, for fluid to flow between the cavity and the first chamber and between the cavity and the second chamber respectively. The valve member can move between (i) a first closed position in which it engages the first port, (ii) a second closed position in which it engages the second port, and (iii) an open position in which the valve member is displaced from both of the first and second ports. Features discussed above are applicable to this assembly, including for example the use of a spherical valve member made from a resiliently deformable material, with first and second pilot streams acting on an actuator piston.

In this assembly, the re-pressurisation control valve optionally includes a first valve member which, when in its closed position, restricts flow of fluid between the cavity and the first chamber, and a second valve member which, when in is closed position, restricts flow of fluid between the cavity and the second chamber.

Optionally, the actuator includes a first piston and a first bore which the first piston can slide in between a retracted position which it occupies when the first valve member is in its closed position and an extended position in which it engages the first valve member to displace it from its port, and a second piston and a second bore which the second piston can slide in between a retracted position which it occupies when the second valve member is in its closed position and an extended position in which it engages the second valve member to displace it from its port. It will be understood that, where the actuator and valve member are both provided by a piston, there may be first piston and second such pistons, the valve members defined by the first and second pistons engaging their respective ports when in their extended positions.

Optionally, the actuator includes a channel for supply of a first pilot stream of fluid to the first and second pistons to cause the first and second pistons to be displaced from their retracted positions towards their extended positions.

Optionally, a housing is provided which defines part of the purge conduit and part of the re-pressurisation pathway.

Optionally, a first housing is provided which defines part of the purge conduit (and which may be a purge stream housing), and a second housing is provided which defines part of the re-pressurisation pathway (and which may be a re-pressurisation housing). The first and second housings may be coupled together for selective fluid communication between the purge conduit in the first housing and the re-pressurisation pathway in the second housing.

The system of the invention can be used to remove contaminants from a fluid. The fluid can be a gas or a liquid. When the fluid is a gas, the system can be used to remove fluids from the gas which are liquid or gaseous. For example, the system can be used to remove water from a pressurised gas. The water can be present in the gas as vapour or as droplets.

The system can be used to separate components of a mixture of fluids. For example, when a fluid contains first and second constituents, the system can be used to adsorb the second constituent so that the fluid contains the first constituent with little or none of the second constituent. An example of such an application for the system might include the generation of nitrogen from a mixture of nitrogen and oxygen (especially ambient air) in which the system is used to adsorb oxygen from the mixture.

The adsorbent material that is provided in the chambers is selected according to the intended application for the system. For example, the adsorbent material can include a desiccant when the system is used to remove water from a gas. Factors affecting the selection of adsorbent material for a pressure swing adsorption system are well understood and are applicable to the system of the present invention. Known adsorbent materials can be used in the system of the invention.

The configuration of the system will be selected according to the intended purpose of the system taking account of known factors and parameters affecting the design of pressure swing adsorption systems. Such factors and parameters can be useful in selecting the materials and dimension of components of the system.

It can be preferred that the housing of the control valve is made from a metallic material. Examples of suitable metallic materials include aluminium and aluminium based alloys, and certain stainless steels.

The materials used for O-ring seals in the system will be selected according to the material with which the seals will come into contact when the system is in use, and the conditions to which the seals will be exposed. Polymeric materials and rubbers will be useful for many applications. An example of a suitable rubber might be an acrylonitrile-butadiene rubber. A suitable material can have a hardness measured on the Shore A scale of 70.

Pressure swing adsorption systems and components of such systems are described below by way of example with reference to the accompanying drawings, in which:
Figure 1 is a schematic representation of a pressure swing adsorption system which includes a re-pressurisation pathway and a re-pressurisation control valve for controlling the flow of fluid in the re-pressurisation pathway.
Figures 2a and 2b are sectional elevation views of a purge conduit and re-pressurisation and control valve assembly of a system of the type shown in Figure 1, with the control valve in the closed and open positions, respectively.
Figure 3 is another sectional elevation view of the purge conduit and the re-pressurisation and control valve of the system shown in Figure 1, on the line B-B in Figure 2a.
Figures 4a, 4b and 4c are sectional elevation views of another purge conduit and re-pressurisation and control valve assembly of a system of the type shown in Figure 1, with the control valve in its first closed position, open position and second closed position, respectively.
Figure 5 is another sectional elevation view of the purge conduit and the re-pressurisation and control valve of the system shown in Figure 1, on the line D-D in Figure 4a.
Figures 6a to 6d are sectional elevation views of another purge conduit and re-pressurisation and control valve assembly of a system of the type shown in Figure 1, with the control valve in its first closed position, first open position, second closed position, and second open position, respectively, each of Figures 6a to 6d including an enlarged view of a portion of the assembly, including the head of the piston actuator and the valve member.
Figures 7 and 8 are top and bottom views, respectively, of another purge conduit and re-pressurisation and control valve assembly of a system of the type shown in Figure 1.
Figure 9 is a sectional elevation view of the purge conduit and re-pressurisation and control valve assembly shown in Figures 7 and 8, on the line E-E in Figure 7, illustrating the control valve in the open position.
Figure 10 is a sectional elevation view of the purge conduit and re-pressurisation and control valve assembly shown in Figures 7 and 8, on the line F-F in Figure 8.
Figure 11 is a sectional view of the purge conduit and re-pressurisation and control valve assembly which is similar to Figure 9, but illustrating the control valve in the closed position.
Figures 12 and 13 are top and bottom views, respectively, of another purge conduit and re-pressurisation and control valve assembly of a system of the type shown in Figure 1.
Figure 14 is a sectional elevation view of the purge conduit and re-pressurisation and control valve assembly shown in Figures 12 and 13, on the line F-F in Figure 12, illustrating the control valve in the closed position.
Figure 15 is a sectional view of the purge conduit and re-pressurisation and control valve assembly which is similar to Figure 14, but illustrating the control valve in the open position.

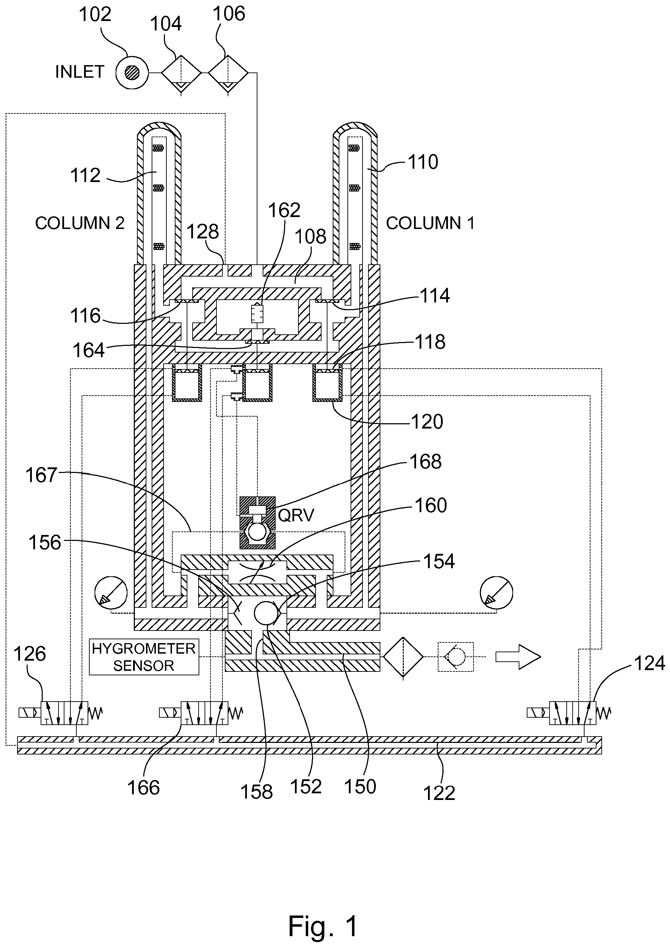

Referring to the drawings, Figure 1 is a schematic flow chart showing features of a pressure swing adsorption system for treating a fluid. For example the system might be a dryer which is used to remove moisture from a pressurised gas such as compressed air. The system has an inlet 102 for a pressurised gas with separators 104, 106 for removing bulk water. The gas is delivered from the separators to an inlet manifold 108. First and second chambers 110, 112 are connected to the inlet manifold 108. Each of the chambers contains an adsorbent material. The nature of the adsorbent material will depend on the nature of the contaminants which are to be removed from the compressed fluid. For example, the adsorbent material will include a desiccant when the system is used to remove moisture from a compressed gas such as compressed air.

First and second inlet valves 114, 116 control flow of gas from the inlet manifold 108 the first and second chambers. The first inlet valve 114 is controlled by means of a piston and cylinder arrangement, where the position of the piston 118 in the cylinder 120 is controlled by means of a flow of pilot gas from a pilot gas manifold 122. The flow of gas from the pilot gas manifold 122 to the first inlet valve 114 is controlled by means of a first 5:2 valve 124. Similarly, the second inlet valve 116 is controlled by means of a piston and cylinder arrangement, which is controlled by means of a second 5:2 valve 126. Pressure is maintained in the pilot gas manifold by means of compressed gas which is supplied from the inlet manifold 108 through a pilot gas port 128.

Gas which has been treated in the chambers 110, 112 is discharged from the system through a system outlet conduit 150. A shuttle valve 152 controls the flow of the treated gas between one of the chambers and the outlet. Details of a shuttle valve which can be used in the system are disclosed in International patent application no. PCT/GB2018/050811, and in UK patent application no. 1705123.6 and patent applications which claim priority from that application.

The shuttle valve 152 has a first port 154 through which the gas stream is received from the first chamber 110 and a second port 156 through which the gas stream is received form the second chamber 112. The shuttle valve has a third port 158 through which treated gas is discharged from the system. The shuttle valve has two positions. In the position shown in Figure 1, the shuttle valve allows flow of treated gas from the second chamber 112 through the second port 156, and through the third port 158 into the outlet conduit 150. The shuttle valve shuts off flow of fluid from the first chamber into the valve.

Operation of a pressure switching adsorption system involves regenerating the adsorbent material in one chamber while the other chamber is adsorbing contaminants from the pressurised fluid. This is achieved in the system when operating as shown in Figure 1 by means of a purge stream which is taken from the gas which has been treated in the second chamber 112. The purge stream is admitted to the first chamber through a variable flow restrictor 160. The purge stream is vented to atmosphere through an exhaust 162, controlled by an exhaust valve 164. The exhaust valve is controlled by means of a piston and cylinder arrangement, where the position of the piston in the cylinder is controlled by means of a flow of pilot gas from the pilot gas manifold 122. The flow of gas from the pilot gas manifold 122 to the exhaust valve 164 is controlled by means of a third 5:2 valve 166.

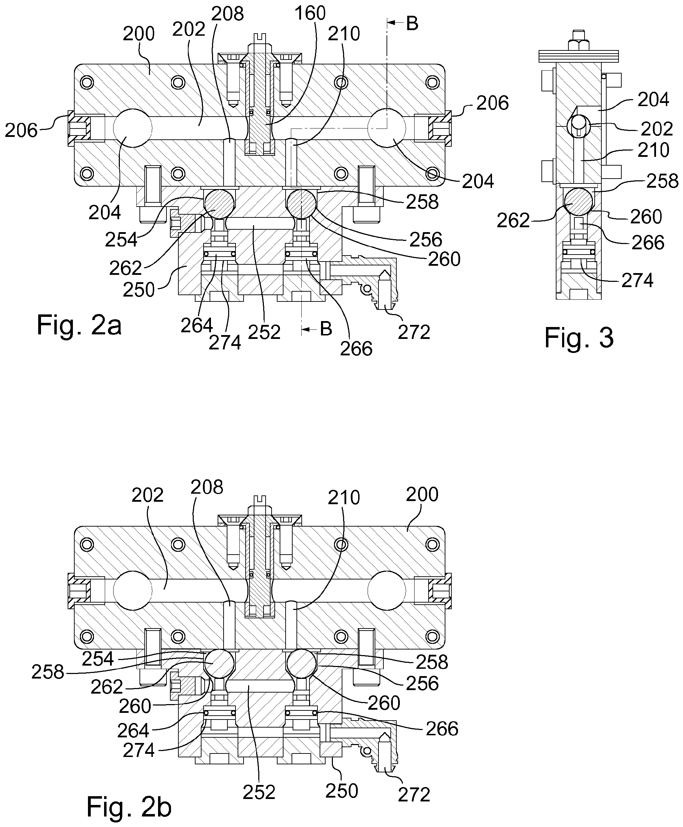

The system includes a re-pressurisation pathway 167 and a re-pressurisation control valve 168 which allows the flow restrictor 160 to be by-passed. This can allow pressurised fluid in the online chamber to flow into the chamber in which the adsorbent has been regenerated until the pressures in the chambers are approximately equal. This can help operating efficiency by reducing loss of energy caused by the switching of the chambers between online and regeneration phase parts of the operating cycle. It can also help to reduce the likelihood of disturbance of the adsorption medium in a chamber which has been regenerated as a result of sudden exposure to system pressure. Suitable re-pressurisation control valves are described below with reference to Figure 2 to 15. Gas is prevented from by-passing the flow restrictor by the re-pressurisation control valve when it is in its closed position. The re-pressurisation control valve is controlled with the piston and cylinder arrangement of the exhaust valve by means of the flow of pilot gas from the pilot gas manifold so that the re-pressurisation control valve is in its open position, allowing gas to by-pass the flow restrictor, when the exhaust valve is closed. The re-pressurisation control valve is in its closed position, preventing gas from by-passing the flow restrictor, when the exhaust valve is open. The re-pressurisation control valve 168 receives a first stream of pilot air to cause the valve to open, at the same time as the exhaust valve receives the stream of pilot air which causes the exhaust valve to close. Optionally, as shown in Figure 1, the re-pressurisation control valve 168 receives a second stream of pilot air to cause the valve to close, at the same time as the exhaust valve receives the stream of pilot air which causes the exhaust valve to open.

Details of the operation of a pressure swing adsorption system are known. The period in which a first chamber is online for treatment of the compressed air or other fluid will be determined according to the nature of the fluid, the nature of the contaminant materials in the fluid which are to be adsorbed, the amount of contaminant materials in the fluid and so on. It is usual for the period in which the second chamber is regenerated by exposure to the purge stream to be less than the period in which the first chamber is online, to allow a period in which the exhaust valve is closed and the re-pressurisation control valve is open and in which the pressure in the second chamber increases to a level which is close or equal to that in the first chamber. For example, a typical system might run with a 360 second operating cycle, in which one chamber is online, with its inlet valve open, for a period of 180 seconds. The other chamber is offline for the whole of that period by maintaining its inlet valve closed. The exhaust valve is opened one second into that cycle, and remains open for 149 seconds for discharge to atmosphere of a purge stream which has passed through the offline chamber. The exhaust valve is then closed, causing the re-pressurisation control valve to switch to its open position, for the remaining 30 seconds of that phase of the operating cycle. This sequence is then repeated with the roles of the two chambers reversed.

Figures 2 and 3 show an assembly which contains a purge stream housing 200 and a re-pressurisation housing 250 which can be used in a pressure swing adsorption system of the kind described above with reference to Figure 1. The purge stream housing has a conduit 202 extending through it between the first chamber 110 and the second chamber 112, with ports 204 through which fluid can flow between the conduit in the purge stream housing and the chambers 110, 112. Plugs 206 are positioned in the conduit at its ends so that the ends of the conduit are closed to fluid flow.

The flow restrictor 160 is positioned in the conduit 202 in the purge stream housing 200. The flow restrictor is used to control the flow of fluid between the first and second chambers 110, 112 through the conduit 202. The flow restrictor can be a variable flow restrictor, allowing the quantity of fluid that can flow between the first and second chambers, for purging adsorbed material from the adsorbent in the chamber which is to be regenerated, to be adjusted. The quantity of fluid that can flow between the chambers should be minimised so that operating efficiency of the system is not compromised unnecessarily. The quantity of fluid that can flow between the chambers should be sufficient to ensure that an adsorbent material in a chamber which has been used to remove a component from a fluid stream (such as moisture from a stream of compressed air) is regenerated. Details of an appropriate variable flow restrictor can be used in the system are disclosed in International patent application no. PCT/GB2018/050814, and in UK patent application no. 1705122.8 and patent applications which claim priority from that application.

The re-pressurisation housing 250 provides the re-pressurisation pathway 167 for fluid to flow between the first and second chambers 110, 112, by-passing the flow restrictor 160. The re-pressurisation pathway within the re-pressurisation housing contains a main branch 252 and two side branches 254, 256. Each of the side branches 254, 256 communicates with a respective side conduit 208, 210 in the purge stream housing 200. As can be seen in Figures 2 and 3, the axis of each of the side branches 254, 256 in the re-pressurisation housing is offset relative to the axis of the respective side conduits 208, 210 in the purge stream housing. It can be seen from the sectional elevation views in Figures 2 and 3 that each of the side branches has a wide bore portion 258 at the interface with the purge stream housing, and a conical portion 260 towards the interface with the main branch 252 of the re-pressurisation pathway.

A spherical rubber valve member 262 is positioned in the wide bore portion 258 of each of the side branches 254, 256 of the re-pressurisation pathway within the re-pressurisation housing. The valve members can slide within the side branches between a closed position in which they are in contact with the wall of the conical portion 260 of the side branches as shown in Figure 2a, and an open position in which the valve members are displaced from the wall of the conical portion as shown in Figure 2b. Each of the valve members adopts its closed position when exposed to fluid at system pressure in the conduit 202 in the purge stream housing.

The re-pressurisation housing 250 contains first and second pistons 264, 266 located in respective bores 268, 270. The axes of the bores are aligned with the axes of the side branches 254, 256 of the re-pressurisation pathway. The pistons can slide between a retracted position and an extended position. The pistons are shown in the retracted position in Figure 2a and in the extended position in Figure 2b.

The pistons can be moved from their retracted positions to their extended positions by means of pressurised pilot air which is supplied through a pilot line port 272 in the re-pressurisation housing 250. Each of the pistons has a large diameter flange 274 which is exposed to the pilot air stream. O-rings are provided on each of the pistons to provide a seal between the pistons and the bores in which the pistons slide.

The purge stream housing 200 and the re-pressurisation housing 250 are provided as separate components in the assembly shown in Figures 2 and 3, which are fastened to one another, for example by means of threaded bolts. It is envisaged that the components which are provided in the two housings might be provided in a single housing.

The flow of fluid between the conduit 202 in the purge stream housing and the re-pressurisation housing 250 in the assembly shown in the drawings is through the side conduits 208, 210. In another arrangement, the side conduits and also the plugs 206 might be omitted so that connections between the conduit 202 in the purge stream housing and the main branch 252 of the re-pressurisation pathway is made through hoses or other connecting conduits which are connected to the conduit 202 where the plugs are provided in the described assembly. Such hoses or other connecting conduits could be connected to the main branch 252 of the re-pressurisation pathway at the ends of the main branch. Pistons for displacing valve members provided in the re-pressurisation pathway from respective seats could be provided in line with the main branch of the re-pressurisation pathway.

Regeneration is performed by passage of a purge stream over the adsorbent material in the regenerating chamber, which is supplied to the regenerating chamber through the conduit 202 in the purge stream housing 200. In the example described above in which an operating half cycle lasts for 180 seconds, this might be the situation for a period of about 150 seconds. The re-pressurisation pathway 167 is closed to passage of fluid between the first and second chambers while one of the chambers is on line and the adsorbent material in the other of the chambers is being regenerated. The re-pressurisation pathway is closed by the spherical rubber valve member 262 on the online side of the flow restrictor 160 being pressed against the conical portions 260 of its side branch 254 of the re-pressurisation pathway, under the system pressure in the purge stream housing. No pilot stream is provided to the re-pressurisation housing 250 during this phase of the operation of the system. The system is shown during this phase of the operation of the system in Figures 2a and 3.

The exhaust valve 164 is closed after regeneration of the adsorbent in the regenerating chamber. The pilot air which is supplied to the exhaust valve to cause it to close is also supplied to the pilot line port 272 in the re-pressurisation housing 250. The large diameter flanges 274 on the pistons 264, 266 are exposed to the pilot air that is supplied through the pilot line port 272. The force on the pistons resulting from the action of the pilot air supplied through the pilot line port 272 is greater than the force on the spherical rubber valve members through their exposure to the system pressure in the purge stream housing, so that the pistons move upwardly to the positions shown in Figure 2b where they are displaced from the conical portions 260 of the side branches 254, 256 of the re-pressurisation pathway. The re-pressurisation pathway 167 is then open to passage of fluid between the first and second chambers, through the side conduits 208, 210 in the purge stream housing 200, and the side branches 254, 256 and the main branch 252 in the re-pressurisation housing 250.

At the end of the period allowed for fluid to flow between the chambers 110, 112 through the re-pressurisation pathway 167, pilot air is supplied to the exhaust valve to cause it to open and the supply of pilot air to the re-pressurisation control valve 168 which caused the pistons to displace the valve members 262 is closed off. The pressure differential between the conduit 202 in the purge stream housing 200 and the main branch 252 of the re-pressurisation pathway within the re-pressurisation housing 250 causes the valve members to be displaced towards their closed positions in contact with the conical portions 260 of the side branches 254, 256 of the re-pressurisation pathway, and the pistons 264, 266 to return to their retracted positions.

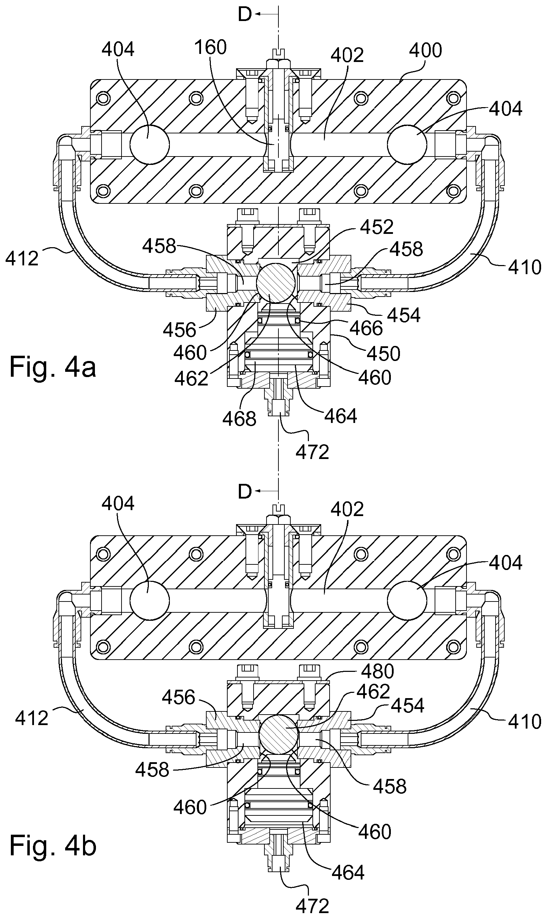

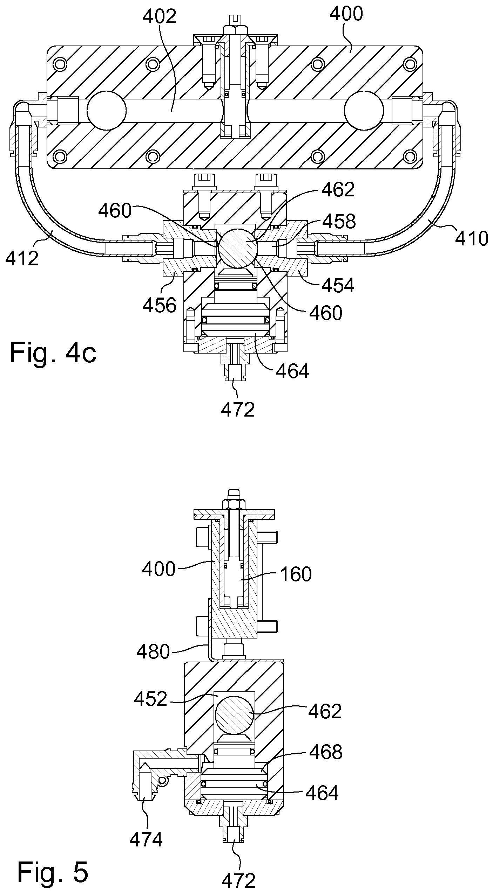

Figures 4 and 5 show an assembly which contains a purge stream housing 400 and a re-pressurisation housing 450 which can be used in a pressure swing adsorption system of the kind described above with reference to Figure 1. The purge stream housing has a conduit 402 extending through it between the first chamber 110 and the second chamber 112, with ports 404 through which fluid can flow between the conduit in the purge stream housing and the chambers 110, 112.

The flow restrictor 160 is positioned in the conduit 402 in the purge stream housing 400. The flow restrictor is used to control the flow of fluid between the first and second chambers 110, 112 through the conduit 402. The flow restrictor can be a variable flow restrictor, allowing the quantity of fluid that can flow between the first and second chambers to be adjusted. The quantity of fluid that can flow between the chambers should be minimised so that operating efficiency of the system is not compromised unnecessarily. The quantity of fluid that can flow between the chambers should be sufficient to ensure that an adsorbent material in a chamber which has been used to remove a component from a fluid stream (such as moisture from a stream of compressed air) is regenerated.

The re-pressurisation housing 450 provides the re-pressurisation pathway 167 for fluid to flow between the first and second chambers 110, 112, by-passing the flow restrictor 160. A first hose 410 extends between first ends of the purge stream and re-pressurisation housings, and a second hose 412 extends between second ends of the purge stream and re-pressurisation housings.

The re-pressurisation pathway within the re-pressurisation housing 450 is provided by a main transverse bore 452. First and second connectors 454, 456 are provided in the main bore at opposite ends of the bore. Each of the connectors has a bore 458 extending through it and the ends of the first and second hoses 410, 412 are received in the bores in the connectors at the exposed ends of the connectors. The inner end faces 460 of the bores 458 in the connectors are conical.

A spherical rubber valve member 462 is positioned in the main transverse bore 452 between the inner end faces 460 of the bore 458 in the connectors 454, 456. The valve member can move within the main transverse bore between a first closed position in which it is received in the conical inner end face 460 in the first connector 454 (as shown in Figure 4a) and a second closed position in which it is received in the conical inner end face 460 in the bore in the second connector 456 (as shown in Figure 4c).

The re-pressurisation housing 450 contains a piston 464 located in a bore 466. The axis of the bore 466 for the piston 464 is perpendicular to the axis of the transverse bore 452 in the re-pressurisation housing 450. The piston can slide between a retracted position and an extended position. The piston has a large diameter flange 468. O-rings are provided on the piston to provide a seal between the piston and the bore in which the piston slides. The piston is shown in the retracted position in Figures 4a and 4c, and in the extended position in Figure 4b.

A first pilot line port 472 is provided in the re-pressurisation housing 450 for the supply of pressurised pilot air to the piston 464. Pilot air supplied to the piston 464 through the first pilot line port 472 acts on the flange 468 on the piston 464 to move the piston from its retracted position to its extended position.

A second pilot line port 474 is provided in the re-pressurisation housing 450 for the supply of pressurised pilot air to the piston 464. This can be seen in Figure 5. Pilot air supplied to the piston 464 through the second pilot line port 474 acts on the flange 468 on the piston 464 to move the piston from its extended position to its retracted position.

The purge stream housing 400 and the re-pressurisation housing 450 are provided as separate components in the assembly shown in Figures 4 and 5. They might be fastened to one another, for example by means of a connector plate (See Figure 5) and threaded bolts. It is envisaged that the components which are provided in the two housings might be provided in a single housing.

The flow of fluid between the conduit 402 in the purge stream housing 400 and the re-pressurisation housing 450 in the assembly shown in Figures 4 and 5 is through the first and second hoses 410, 412.

Regeneration is performed by passage of a purge stream over the adsorbent material in the regenerating chamber, which is supplied to the regenerating chamber through the conduit 402 in the purge stream housing 400. In the example described above in which an operating half cycle lasts for 180 seconds, this might be the situation for a period of about 150 seconds. The re-pressurisation pathway 167 is closed to passage of fluid between the first and second chambers while one of the chambers is on line and the adsorbent material in the other of the chambers is being regenerated. The re-pressurisation pathway is closed by the spherical rubber valve member 462 on the online side of the flow restrictor 160 being pressed against the conical inner end face 460 of the bore 458 in one of the connectors 454, 456, under the system pressure in the purge stream housing 400. The 5:2 valve 166 which controls the supply of the pilot stream air to the exhaust valve 164 and the re-pressurisation control valve 168 ensures that the piston 464 is not exposed to pilot stream pressure which would tend to urge the piston towards the valve member 462 during this phase of the operation of the system. The system is shown during this phase of the operation of the system in Figures 4a, 4c and 5. The state of the system as shown in Figure 4a differs from that as shown in Figure 4c in that the valve member engages the conical inner end face 460 in the bore 458 of the first connector 454 in Figure 4a, and it engages the conical inner end face 460 in the bore 458 of the second connector 456 in Figure 4c.

The exhaust valve 164 is closed after regeneration of the adsorbent in the regenerating chamber. The pilot air which is supplied to the exhaust valve 164 to cause it to close is also supplied to the first pilot line port 472 in the re-pressurisation housing 450. The large diameter flange 468 on the piston 464 is exposed to the pilot air that is supplied through the first pilot line port 472. The force on the piston resulting from the action of the pilot air supplied through the first pilot line port 472 is greater than the force on the spherical rubber valve member 462 through its exposure to the system pressure in the purge stream housing, so that the piston moves upwardly to the position shown in Figure 4b. It then acts on the valve member 462, displacing it in a direction which is perpendicular to that of the transverse bore 452 in the re-pressurisation housing 450. The valve member is then not able to engage either of the conical inner end faces 460 of the bores 458 in the connectors 454, 456. The re-pressurisation pathway 167 is then open to passage of fluid between the first and second chambers, through the 410, 412 and the re-pressurisation housing 450.

At the end of the period allowed for fluid to flow between the chambers 110, 112 through the re-pressurisation pathway 167, pilot air is supplied to the exhaust valve to cause it to open. Pilot air is also supplied to the re-pressurisation housing 450 through the second pilot line port 474 where it acts on the top surface of the large diameter flange 468 on the piston 464. The pilot air supplied through the second pilot line port 474 causes the piston 464 to return to its retracted position. The valve member 462 is then able to engage one of the conical inner end faces 460 of the bores 458 in the connectors 454, 456. The connector 454, 456 which is engaged by the valve member depends on whether it is the first chamber 110 or the second chamber 112 which is on line, controlled by means of the inlet valves 114, 116 as discussed above.

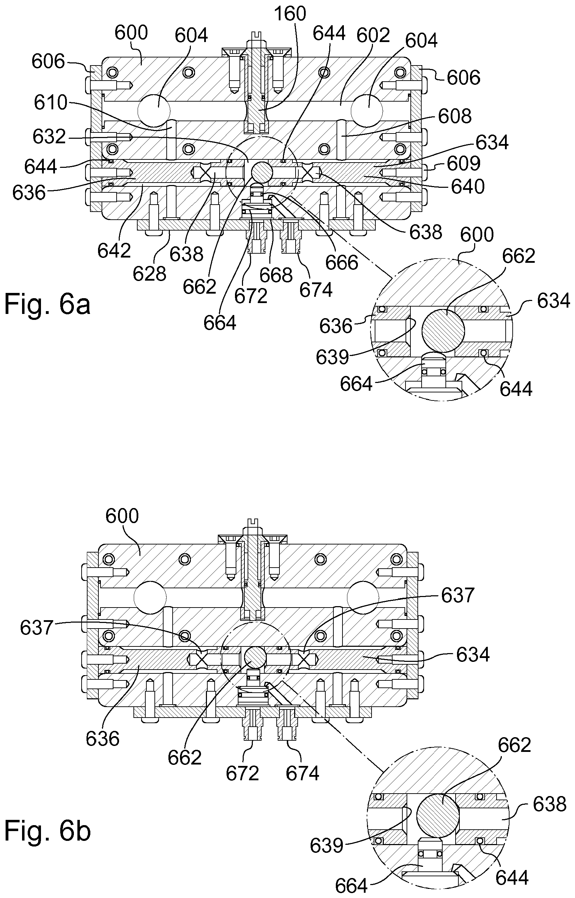

Figures 6a to 6d show an assembly having a housing 600, which can be used in a pressure swing adsorption system of the kind described above with reference to Figure 1. The housing 600 has a first conduit 602 extending through it between the first chamber 110 and the second chamber 112, with ports 604 through which fluid can flow between the first conduit 602 and the chambers 110, 112.

As discussed above in relation to the assembly discussed above with reference to Figures 2 and 3, the flow restrictor 160 is positioned in the first conduit 602 in the housing 600. The flow restrictor is used to control the flow of fluid between the first and second chambers 110, 112 through the first conduit 602. The flow restrictor can be a variable flow restrictor, allowing the quantity of fluid that can flow between the first and second chambers to be adjusted.

The housing 600 also has a second conduit 632 extending through the housing parallel to the first conduit 602, which provides the re-pressurisation pathway 167 for fluid to flow between the first and second chambers 110, 112, by-passing the flow restrictor 160. First and second side conduits 608, 610 extend between the first conduit 602 and the second conduit 632. The second side conduit is connected to the first conduit on the opposite side of the flow restrictor from the connection between the first side conduit and the first conduit.

The second conduit contains a first spool 634 at a first end and a second spool 636 at a second end. Each of the spools has an axial bore 638 extending partway along its length which is open at the end which faces the other of the spools. The face 639 of the spool surrounding the bore is conically shaped (as can be seen in the enlarged view portion in each of Figures 6a to 6d).

Each of the spools 634, 636 has a reduced diameter central portion 640 so that there is an annular cavity 642 surrounding each spool between its external surface and the inner wall of the second conduit 632. A transverse bore 637 extends between the axial bore 638 and the annular cavity. The side conduits 608, 610, the annular cavities 642 and the transverse bores 637 provide pathways for fluid to flow between the first conduit 602 and the axial bores 638 in the spools 634, 636. Seals 644 are provided between the spools and the inner wall of the second conduit to prevent flow of fluid from the annular cavities to other regions of the second conduit, other than through the bores in the spools.

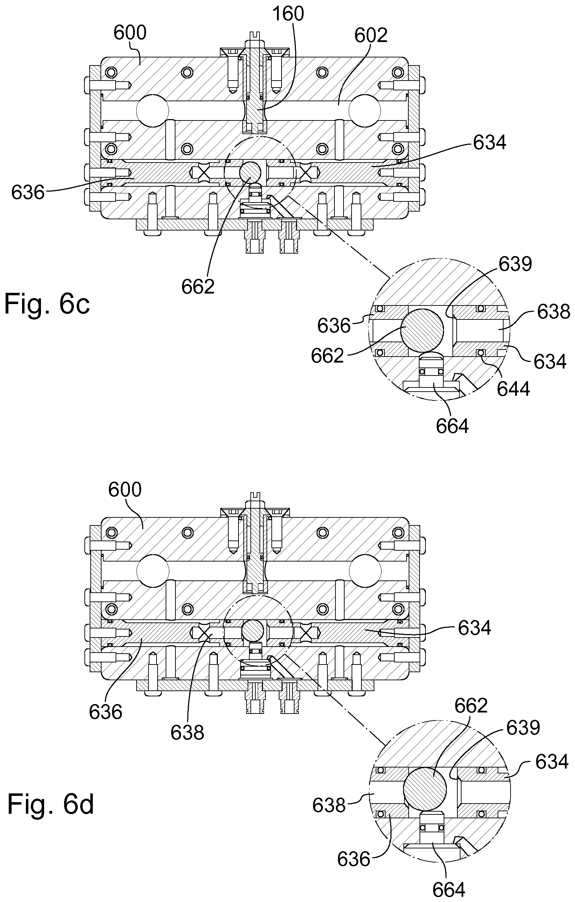

A spherical rubber valve member 662 is positioned in the second conduit, between the facing ends of the spools 634, 636. The valve member can move in the space within the second conduit between the facing ends of the spools between first and second closed positions in which it is in tight sealing engagement with the conical end face of one of the spools and separated from the end face of the other of the spools (as shown in Figures 6a and 6c), and first and second open positions in which it is displaced so that it is no longer in tight sealing engagement with the conical end face 639 of one of the spools (as shown in Figures 6b and 6d).

The re-pressurisation pathway 167 for fluid to flow between the first and second chambers 110, 112, by-passing the flow restrictor 160, is provided by the side conduits 608, 610, the annular cavities 642 which surround the spools, the transverse bores 637 in the spools, the axial bores 638 in the spools, and the space within the second conduit 632 between the facing ends of the spools.

The housing 600 contains a piston 664 located in a bore 666. The axis of the bore 666 for the piston 664 is perpendicular to the axis of the second conduit 632 in the housing 600. The piston can slide between a retracted position and an extended position. The piston has a large diameter flange 668. O-rings are provided on the piston to provide a seal between the piston and the bore in which the piston slides. The piston is shown in the retracted position in Figures 6a and 6c in which the end of the piston is separated from the valve member. It is shown in the extended position in Figures 6b and 6d in which it is in contact with the valve member, displacing it from the conical end face 639 of one of the spools.

A first pilot line port 672 is provided in the housing 600 for the supply of pressurised pilot air to the piston 664. Pilot air supplied to the piston 664 through the first pilot line port 672 acts on the flange 668 on the piston 664 to move the piston from its retracted position to its extended position.

A second pilot line port 674 is provided in the housing 600 for the supply of pressurised pilot air to the piston 664. Pilot air supplied to the piston 464 through the second pilot line port 674 acts on the flange 668 on the piston 664 to move the piston from its extended position to its retracted position.

The housing 600 is fitted with end plates 606 which close the ends of the first conduit 602 and the ends of the second conduit 632. Threaded fasteners 609 which extend through the end plates 606 into the spools 634, 636 to fasten the spools against movement within the second conduit.

The housing is fitted with a base plate 628 which closes the ends of the side conduits 608, 610. It also retains the piston 664 within its bore 666.

Regeneration is performed by passage of a purge stream over the adsorbent material in the regenerating chamber, which is supplied to the regenerating chamber through the conduit 602 in the housing 600. In the example described above in which an operating half cycle lasts for 180 seconds, this might be the situation for a period of about 150 seconds. The re-pressurisation pathway 167 is closed to passage of fluid between the first and second chambers while one of the chambers is on line and the adsorbent material in the other of the chambers is being regenerated. The re-pressurisation pathway is closed by the spherical rubber valve member 662 on the online side of the flow restrictor 160 being pressed against the conical end face surrounding the axial bore 638 in one of the spools 634, 636, under the system pressure in the first conduit 602. The 5:2 valve 166 which controls the supply of the pilot stream air to the exhaust valve 164 and the re-pressurisation control valve 168 ensures that the piston 664 is not exposed to pilot stream pressure which would tend to urge the piston towards the valve member 662 during this phase of the operation of the system. The system is shown during this phase of the operation of the system in Figures 6a and 6c. The state of the system as shown in Figure 6a differs from that as shown in Figure 6c in that the valve member engages the conical end face 639 of the first spool 634 in Figure 6a, and it engages the conical end face 639 of the second spool 636 in Figure 6c, according to whether the chamber which is online is the second chamber or the first chamber. The engagement of the valve member with the conical end face of one of the spools prevents flow of fluid along the re-pressurisation pathway.

The exhaust valve 164 is closed after regeneration of the adsorbent in the regenerating chamber. The pilot air which is supplied to the exhaust valve 164 to cause it to close is also supplied to the first pilot line port 672. The large diameter flange 668 on the piston 664 is exposed to the pilot air that is supplied through the first pilot line port 672. The force on the piston resulting from the action of the pilot air supplied through the first pilot line port 672 is greater than the force on the spherical rubber valve member 662 through its exposure to the system pressure in the purge stream housing, so that the piston moves upwardly to the position shown in Figure 6b. It then acts on the valve member 662, displacing it in a direction which is perpendicular to that of the second conduit 632. The valve member is then not able to engage the conical face 639 of the first spool 634. The re-pressurisation pathway 167 is then open to passage of fluid between the first and second chambers, through the first and second side conduits 608, 610, the annular cavities 642, the transverse bores 637, and the axial bore 638. The system is shown during this phase of the operation of the system in Figures 6b and 6d. The state of the system as shown in Figure 6b differs from that as shown in Figure 6d in that the valve member is shown in Figure 6b separated from the end face 639 of the second spool 636, and in contact with the conical end face 639 of the first spool 634 while being displaced from sealing contact with that end surface by the piston. In Figure 6d, the valve member is shown separated from the end face 639 of the first spool 634, and in contact with the conical end face in the bore of the second spool 636 while being displaced from sealing contact with the end surface by the piston. The valve member has the position shown in Figure 6b when the second chamber is online and the first chamber is being re-pressurised. The valve member has the position shown in Figure 6d when the first chamber is online and the second chamber is being re-pressurised.

At the end of the period allowed for fluid to flow between the chambers 110, 112 through the re-pressurisation pathway 167, pilot air is supplied to the exhaust valve to cause it to open. Pilot air is also supplied through the second pilot line port 674 where it acts on the top surface of the large diameter flange 668 on the piston 664. The pilot air supplied through the second pilot line port 674 causes the piston 664 to return to its retracted position. The valve member 662 is then able to engage the conical face 639 on the end of one of the spools 634, 636. The spool 634, 636 which is engaged by the valve member depends on whether it is the first chamber 110 or the second chamber 112 which is on line (and therefore at a higher pressure), controlled by means of the inlet valves 114, 116 as discussed above.

The assembly which is shown in Figure 6 has the advantage of having fewer parts and being simpler in construction by virtue of having first and second conduits in a single housing. The assembly is also compact. The use of the end plates, with the side conduits within the housing, represents one way to implement the single housing approach. The use of a single valve member which shuttles between two conical seal surfaces, with a single piston actuator, also helps to reduce the number of parts.

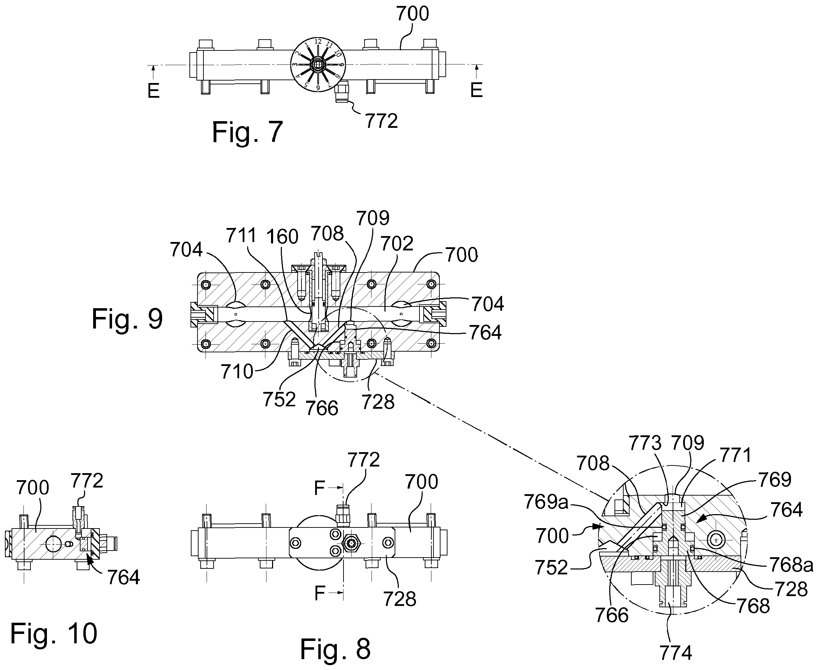

Figures 7 and 8 show another purge conduit and re-pressurisation and control valve assembly having a housing 700, which can be used in a pressure swing adsorption system of the kind described above with reference to Figure 1. The housing 700 is also shown in the sectional view of Figure 9, which is taken along line E-E in Figure 7. The housing has a conduit 702 extending through it between the first chamber 110 and the second chamber 112 of the system, with ports 704 through which fluid can flow between the conduit 702 in the housing 700 and the chambers 110, 112.

The flow restrictor 160 is positioned in the conduit 702 in the purge stream housing 700. The flow restrictor is used to control the flow of fluid between the first and second chambers 110, 112 through the conduit 702. The flow restrictor can be a variable flow restrictor, allowing the quantity of fluid that can flow between the first and second chambers to be adjusted. Once again, the quantity of fluid that can flow between the chambers should be minimised so that operating efficiency of the system is not compromised unnecessarily.

The housing 700 also provides the re-pressurisation pathway 167 for fluid to flow between the first and second chambers 110 and 112, by-passing the flow restrictor 160. The housing 700 therefore acts as both a purge stream housing and a re-pressurisation housing. The re-pressurisation pathway within the housing contains a main branch 752, which is defined by a chamber formed in the housing 700, and which is closed by a base plate 728 connected to the housing. Branch conduits 708 and 710 extend through the housing 700, and open on to the chamber 752, so as to communicate with the main branch. Axes of the branch conduits are each disposed at non-parallel angles relative to the axis of the conduit 702, typically in the range of around 40° to 60°, the angle selected being determined by factors including manufacturing constraints and dimensions of the housing 700.

The branch conduit 708 has a port 709, and the branch conduit 710 has a port 711, each of which can communicate with the conduit 702. The re-pressurisation pathway 167 within the housing 700 is provided by the angled branch conduit 708, the chamber forming the main branch 752, and the angled branch conduit 710. Fluid enters and exits the re-pressurisation pathway 167 via the ports 709 and 711, the direction of flow along the pathway depending upon which one of the chambers 110 and 112 is online, and which one is being regenerated.

The housing 700 contains a piston 764 located in a bore 766, best shown in the enlarged detail view of Figure 9. The housing base plate 728 retains the piston 764 within its bore 766. The axis of the bore 766 for the piston 764 is perpendicular to the axis of the conduit 702 in the housing 700. In this embodiment, the piston 766 defines both the actuator and the valve member of the assembly (and so the pressure swing adsorption system), the actuator and the valve member being provided integrally. However, the valve member may be provided separately from the actuator, and so as separate parts or components, and may be connected to the actuator via a mechanical connection such as a bolt, or some other suitable threaded connection.

In the illustrated embodiment, a first part of the piston 764, in the form of a flange 768, defines the actuator and is movable within a larger diameter portion of the bore 766. A second part of the piston 764, in the form of a stem 769, is of a smaller diameter and defines the valve member. The stem 769 is moveable within a smaller diameter portion of the bore 766. The different diameters of the flange 768 and the stem 769 are such that a differential pressure force is imparted on the piston, between a piston face defined by the flange and a piston face defined by the stem. This assists in moving the piston 764 between a position in which the valve member (stem 769) is in its open position, and a position in which the valve member is in its closed position.

The flange 768 and the stem 769 carry respective seals, in the form of O-rings 768a and 769a, which provide a sliding seal with the wall of the piston bore 766, and facilitate formation of the first and second piston faces. As can be appreciated particularly from the enlarged detail view of Figure 9, the O-ring 768a facilitates the formation of first and second opposed piston faces on each side of the flange 768. Similarly, the O-ring 769a facilitates the formation of first and second opposed piston faces on each side of the O-ring. The O-rings 768a and 769a, being of different outer diameters, define the different areas of the piston faces.

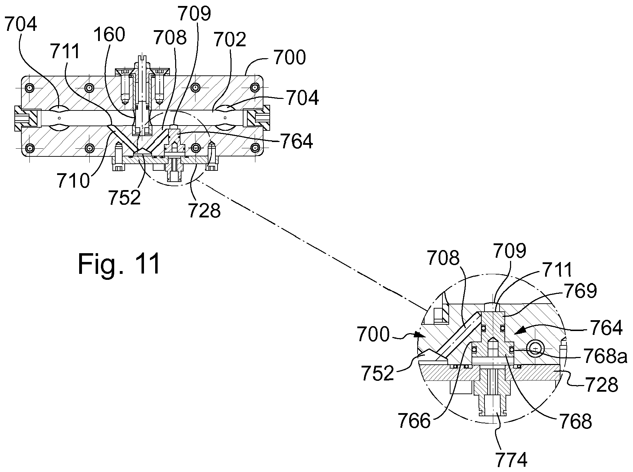

An end face 771 of the piston stem 769 defines a valve face, and the housing 700 defines a valve seat 773 which surrounds the port 709. The valve face 771 sealingly abuts the valve seat 773 when the piston stem (valve member) is in its closed position (Figure 11), and is out of sealing contact with the valve seat when the piston stem is in its open position (Figure 9).

A first pilot line port 772 is provided in the housing 700, for the supply of pressurised pilot air to the piston 764. Pilot air supplied to the piston 764 through the first pilot line port 772 acts on the upper (in the drawing) piston face defined by the piston flange 768, to move the piston 764 from its extended position to its retracted position. This can be best appreciated from the sectional view of Figure 10, taken along line F-F in Figure 8. A second pilot line port 774 is provided in the housing 700 for the supply of pressurised pilot air to a different part of the piston 764, as best shown in the enlarged detail view of Figure 9. Pilot air supplied to the piston 764 through the second pilot line port 774 acts on the bottom (in the drawing) piston face defined by the flange 768, to move the piston 764 from its retracted position to its extended position. It will be understood that, during the supply of pilot air to one side of the piston flange 768, air is bled from the other side, via the pilot ports 772/774, in order to allow movement of the piston 764.

In the extended position of the piston 764, when the valve face 771 is in sealing abutment with the valve seat 773, the piston stem 769 (which defines the valve member) closes the port 709, and so shuts off flow along the re-pressurisation pathway 167. This is the case irrespective of which one of the first and second chambers 110 and 112 is online, since the piston 764 effectively shuts off flow through the port 709 in either flow direction. Conversely, when the valve face 771 is out of sealing contact with the valve seat 773, fluid flow along the pathway 167 is permitted.

It will be understood that, in the situation in which the port 709 acts as an inlet (so that the piston stem 769 experiences system pressure in the portion of the conduit 702 that the port 709 opens on to), the differential pressure areas of the piston flange 768 and the stem 769 create a differential force on the piston which acts to urge it into sealing abutment with the valve seat 773, so long as pilot air at system pressure acts on the bottom piston face of the flange 768 (supplied through pilot port 774).

Regeneration is performed by passage of a purge stream over the adsorbent material in the regenerating chamber, which is supplied to the regenerating chamber through the conduit 702 in the housing 700. In the example described above in which an operating half cycle lasts for 180 seconds, this might be the situation for a period of about 150 seconds. The re-pressurisation pathway 167 is closed to passage of fluid between the first and second chambers while one of the chambers is on line and the adsorbent material in the other of the chambers is being regenerated. The re-pressurisation pathway is closed by the piston stem 769 (as described above) being pressed against the valve seat 773, under the system pressure in the housing 700. The 5:2 valve 166 which controls the supply of the pilot stream air to the exhaust valve 164 and the re-pressurisation control valve 168 also supplies pilot stream pressure to the second pilot line port 774, acting on the bottom piston face defined by the flange 768, which urges the piston 764 towards its extended position during this phase of the operation of the system. The system is shown during this phase of the operation of the system in Figure 11.

The force on the piston stem 769 (valve member) resulting from the action of the pilot air supplied through the second pilot line port 774 to the bottom piston face of the flange 768 is greater than the force on the stem through its exposure to the system pressure in the purge stream housing conduit 702, so that the piston 764 is held in the closed position shown in Figure 11. The re-pressurisation pathway 167 is thus closed to passage of fluid between the first and second chambers, through the branch 708, chamber 752 and branch 710.

The exhaust valve 164 is closed after regeneration of the adsorbent in the regenerating chamber. The pilot air which is supplied to the exhaust valve 164 to cause it to close is also supplied to the first pilot line port 772 in the housing 700. The large diameter flange 768 on the piston 764 is exposed to the pilot air that is supplied through the first pilot line port 772, on the stem side of the flange (acting on the upper piston face defined by the flange). This moves the piston 764 to the retracted position of Figure 9, opening the port 709 and so permitting flow along the re-pressurisation pathway 167.

At the end of the period allowed for fluid to flow between the chambers 110, 112 through the re-pressurisation pathway 167, pilot air is supplied to the exhaust valve to cause it to open. Pilot air is also supplied to the housing 700 through the second pilot line port 774 where it acts on the bottom piston face of the large diameter flange 768 on the piston 464. The pilot air supplied through the second pilot line port 774 causes the piston 764 to move to its extended position. The piston stem 769 (valve member) is then able to engage the valve seat 773, closing the port 709 and so shutting-off flow along the re-pressurisation pathway 167.

As with the assembly shown in Figure 6, the assembly of Figures 7 to 11 has the advantage of having fewer parts and being simpler in construction by virtue of having the re-pressurisation pathway (provided by branch conduits) in a single housing, and with a single actuator and valve member (provided by the piston) which can shut off and open flow through the pathway irrespective of which chamber is online and which regenerating. It will be understood that, in a variation on this embodiment, a separate actuator and valve member (provided by a piston) may be provided for each port defined by the branch conduits (708, 710), each operated in the fashion described above.

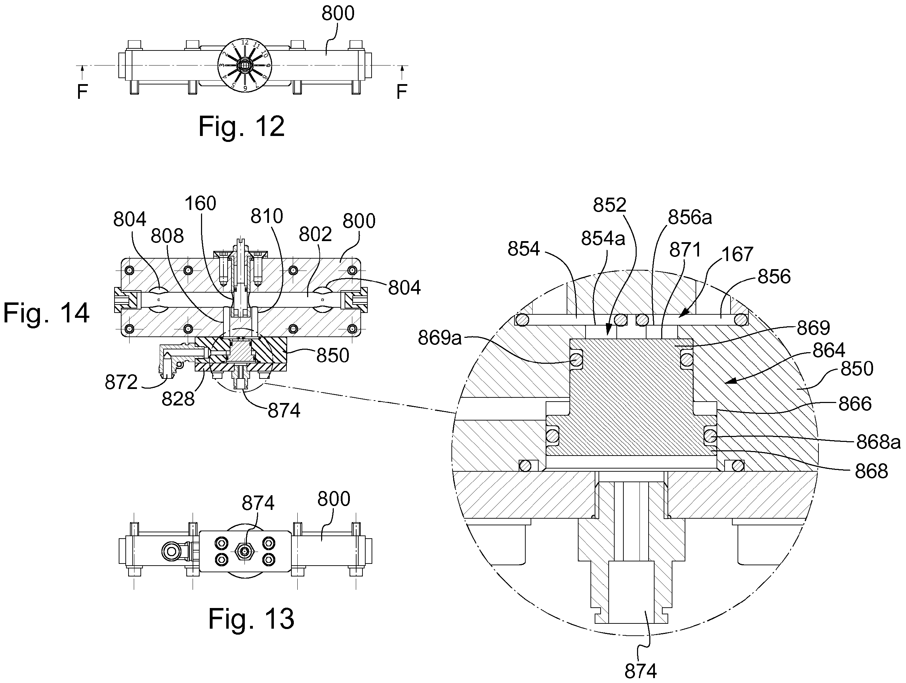

Figures 12 and 13 show another purge conduit and re-pressurisation and control valve assembly having a purge stream housing 800 and a re-pressurisation housing 850, which can be used in a pressure swing adsorption system of the kind described above with reference to Figure 1. The assembly is also shown in the sectional view of Figure 14, which is taken along line F-F in Figure 12. The purge stream housing 800 has a conduit 802 extending through it between the first chamber 110 and the second chamber 112 of the system, with ports 804 through which fluid can flow between the conduit 802 in the housing 800 and the chambers 110, 112.

The flow restrictor 160 is positioned in the conduit 802 in the purge stream housing 800. The flow restrictor is used to control the flow of fluid between the first and second chambers 110, 112 through the conduit 802. The flow restrictor can be a variable flow restrictor, allowing the quantity of fluid that can flow between the first and second chambers to be adjusted. Once again, the quantity of fluid that can flow between the chambers should be minimised so that operating efficiency of the system is not compromised unnecessarily.

The re-pressurisation housing 850 provides the re-pressurisation pathway 167 for fluid to flow between the first and second chambers 110, 112, by-passing the flow restrictor 160. The re-pressurisation pathway within the re-pressurisation housing 850 comprises a main branch or portion 852, and two side branches or portions 854 and 856. The side branches 854 and 856 communicate with the side conduits 808 and 810, respectively, in the purge stream housing 800. In this respect, the assembly shown in Figures 12 to 14 is similar to that shown in Figures 2a to 3, comprising separate purge stream and re-pressurisation housings. The assembly of Figures 12 to 14 differs from that of Figures 2a to 3 in that it comprises a piston 864 which defines both an actuator and a valve member of the assembly (and so the pressure swing adsorption system). In this respect, the assembly shown in Figures 12 to 14 is similar to that shown in Figures 7 to 11.

The re-pressurisation housing 850 contains the piston 864, which is located in a bore 866, best shown in the enlarged detail view of Figure 14. A base plate 828 retains the piston 864 within its bore 866 in the housing 850. The axis of the bore 866 for the piston 864 is perpendicular to the axis of the conduit 802 in the purge stream housing 800. In this embodiment, the actuator and the valve member defined by the piston 864 are provided integrally. However, the valve member may again be provided separately from the actuator, and so as separate parts or components.

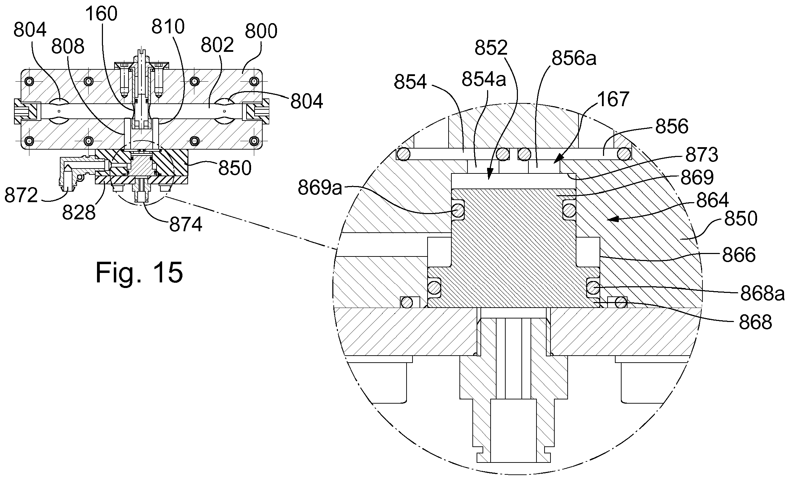

A first part of the piston 864, in the form of a flange 868, defines an actuator and is movable within a larger diameter portion of the bore 866. A second part of the piston 864, in the form of a stem 869, is of a smaller diameter and defines a valve member. The stem 869 is moveable within a smaller diameter portion of the bore 866. The different diameters of the flange 868 and the stem 869 are such that a differential pressure force is imparted on the piston, between a piston face defined by the flange and a piston face defined by the stem. This assists in moving the piston 864 between a position in which the valve member (stem 869) is in its open position, and a position in which the valve member is in its closed position. The piston 864 is shown in its closed position in Figure 14, and in its open position in Figure 15.

The flange 868 and the stem 869 carry respective seals, in the form of O-rings 868a and 869a, which provide a sliding seal with the wall of the piston bore 866, and facilitate formation of the first and second piston faces. The O-ring 868a facilitates the formation of first and second opposed piston faces on each side of the flange 868. Similarly, the O-ring 869a facilitates the formation of first and second opposed piston faces on each side of the O-ring. The O-rings 868a and 869a, being of different outer diameters, define the different areas of the piston faces.

An end face 871 of the piston stem 869 defines a valve face, and the re-pressurisation housing 850 defines a valve seat 873, which is best shown in the enlarged detail view of Figure 15. The valve seat 873 surrounds ports 854a and 856a which communicate with the branch conduits 854 and 856, fluid flowing along the re-pressurisation pathway 167 through the ports. The valve face 871 sealingly abuts the valve seat 873 when the piston stem 869 (valve member) is in its closed position (Figure 14), and is out of sealing contact with the valve seat when the piston stem is in its open position (Figure 15).

A first pilot line port 872 is provided in the housing 850, for the supply of pressurised pilot air to the piston 864. Pilot air supplied to the piston 864 through the first pilot line port 872 acts on the upper (in the drawings) piston face defined by the piston flange 868, to move the piston 864 from its extended position to its retracted position. A second pilot line port 874 is provided in the housing 850 for the supply of pressurised pilot air to a different part of the piston 864. Pilot air supplied to the piston 864 through the second pilot line port 874 acts on the bottom (in the drawing) piston face defined by the flange 868, to move the piston 864 from its retracted position to its extended position. It will be understood that, during the supply of pilot air to one side of the piston flange 868, air is bled from the other side, via the pilot ports 872/874, in order to allow movement of the piston 864.

In the extended position of the piston 864, when the valve face 871 is in sealing abutment with the valve seat 873, the piston stem 869 (which defines the valve member) closes the branch conduits 854 and 856, thereby shutting off fluid communication between the branch conduits along the main branch 852, and so shuts off flow along the re-pressurisation pathway 167. This is the case irrespective of which one of the first and second chambers 110 and 112 is online, since the piston 864 effectively shuts off flow through the branch conduits 854 and 856 in either flow direction.

Conversely, when the valve face 871 is out of sealing contact with the valve seat 873, fluid flow along the pathway 167 is permitted. This is best shown in the enlarged detail view of Figure 15. As can be seen here, the main branch 852 effectively comprises a portion of the piston bore 866, and ports 854a and 856a which communicate with the respective side branches 854 and 856 and the piston bore 866.

It will be understood that, whether the port 854a or the port 856a acts as an inlet to the re-pressurisation pathway 167, the differential pressure areas of the piston flange 868 and the stem 869 create a differential force on the piston 864 which acts to urge it into sealing abutment with the valve seat 873, so long as pilot air at system pressure acts on the bottom piston face of the flange 868 (supplied through pilot port 874.

Regeneration is performed by passage of a purge stream over the adsorbent material in the regenerating chamber, which is supplied to the regenerating chamber through the conduit 802 in the purge stream housing 800. In the example described above in which an operating half cycle lasts for 180 seconds, this might be the situation for a period of about 150 seconds. The re-pressurisation pathway 167 is closed to passage of fluid between the first and second chambers while one of the chambers is on line and the adsorbent material in the other of the chambers is being regenerated. The re-pressurisation pathway is closed by the piston stem 869 (as described above) being pressed against the valve seat 873, under the system pressure in the purge stream housing 800. The 5:2 valve 166 which controls the supply of the pilot stream air to the exhaust valve 164 and the re-pressurisation control valve 168 also supplies pilot stream pressure to the second pilot line port 874, acting on the bottom piston face defined by the flange 868, which urges the piston 864 towards its extended position during this phase of the operation of the system. The system is shown during this phase of the operation of the system in Figure 14.

The force on the piston stem 869 (valve member) resulting from the action of the pilot air supplied through the second pilot line port 874 to the bottom piston face of the flange 868 is greater than the force on the stem through its exposure to the system pressure in the purge stream housing conduit 802, so that the piston 864 is held in the closed position shown in Figure 14. The ports 854a and 856a are therefore closed, with the result that the re-pressurisation pathway 167 is closed to passage of fluid between the first and second chambers, through the housing conduit 808, branch conduit 854, main conduit 852, branch conduit 856 and housing conduit 810.

The exhaust valve 164 is closed after regeneration of the adsorbent in the regenerating chamber. The pilot air which is supplied to the exhaust valve 164 to cause it to close is also supplied to the first pilot line port 872. The large diameter flange 868 on the piston 864 is exposed to the pilot air that is supplied through the first pilot line port 872, on the stem side of the flange (acting on the upper piston face defined by the flange). This moves the piston 864 to the retracted position of Figure 15, opening the ports 854a and 856a, and so permitting flow along the re-pressurisation pathway 167.

At the end of the period allowed for fluid to flow between the chambers 110, 112 through the re-pressurisation pathway 167, pilot air is supplied to the exhaust valve to cause it to open. Pilot air is also supplied through the second pilot line port 874 where it acts on the bottom piston face of the large diameter flange 868 on the piston 864. The pilot air supplied through the second pilot line port 874 causes the piston 864 to move to its extended position. The piston stem 869 (valve member) is then able to engage the valve seat 873, closing the ports 854a and 856a, and so shutting-off flow along the re-pressurisation pathway 167.
8. A pressure swing adsorption system as claimed in claim 7, in which the actuator includes a channel (872) for supply of a first pilot stream of fluid to the piston to cause the piston to be displaced from its retracted position towards its extended position.
9. A pressure swing adsorption system as claimed in claim 8, in which the actuator includes a channel (874) for supply of a second pilot stream of fluid to the piston to cause the piston to be displaced from its extended position towards its retracted position.
10. A pressure swing adsorption system as claimed in claim 1, or any one of claims 8 to 10 when dependent on claim 1, in which the valve member is an approximately spherical body (462).
11. A pressure swing adsorption system as claimed in claim 10, in which the surface of the valve member is formed from a resiliently deformable material.
12. A pressure swing adsorption system as claimed in claim 1, or any one of claims 7 to 11 when dependent on claim 1, in which the cavity in the housing has first and second ports for the valve member, for fluid to flow between the cavity and the first chamber and between the cavity and the second chamber respectively, and in which the valve member can move between (i) a first closed position in which it engages the first port, (ii) a second closed position in which it engages the second port, and (iii) an open position in which the valve member is displaced from both of the first and second ports.
13. A pressure swing adsorption system as claimed in any preceding claim, in which the re-pressurisation control valve includes a first valve member which, when in its closed position, restricts flow of fluid between the cavity and the first chamber, and a second valve member which, when in is closed position, restricts flow of fluid between the cavity and the second chamber.
14. A pressure swing adsorption system as claimed in claim 13, in which the actuator includes a first piston (264) and a first bore which the first piston can slide in between a retracted position which it occupies when the first valve member is in its closed position

## Claims

1. A pressure swing adsorption system which includes first and second chambers (110, 112), each containing an adsorption medium, in which when the system is in use a fluid is directed to flow over the adsorption medium in one of the chambers (the "online chamber") in order to adsorb contaminants in the fluid while the adsorption medium in the other of the chambers is regenerated by desorption of adsorbed contaminants (the "regenerating chamber"), the system including:
a. a purge conduit which extends between the first and second chambers for delivering fluid when the system is in use from the online chamber to the regenerating chamber, the purge conduit containing a flow restrictor (160) for controlling the volume of fluid which can flow through the purge conduit when the system is in use, wherein the purge stream is vented to atmosphere through an exhaust (162), controlled by an exhaust valve (164), the exhaust valve being controlled by means of a piston and cylinder arrangement, where the position of the piston in the cylinder is controlled by means of a flow of pilot gas;
b. a re-pressurisation pathway (167) which extends between the first and second chambers for delivering fluid when the system is in use from the online chamber to the regenerating chamber, bypassing the flow restrictor in the purge conduit,
c. a re-pressurisation control valve (168) for controlling the flow of fluid in the re-pressurisation pathway, which comprises a housing (850) having a cavity within it with a port (854a, 856a) for flow of fluid along the re-pressurisation pathway and a valve member (864) which can move in the cavity between (i) a closed position in which the valve member engages the port and restricts flow of fluid through the re-pressurisation pathway and (ii) an open position in which the valve member is displaced from the port allowing flow of fluid through the re-pressurisation pathway, and
d. an actuator (864) which can act on the valve member to move it from its closed position;
e. **characterised in that** the re-pressurisation control valve is controlled with the piston and cylinder arrangement of the exhaust valve by means of the flow of pilot gas so that when the re-pressurisation control valve is in its open position, allowing gas to by-pass the flow restrictor, the exhaust valve is closed and when the re-pressurisation control valve is in its closed position, preventing gas from by-passing the flow restrictor, the exhaust valve is open.

2. A pressure swing adsorption system as claimed in claim 1, in which the valve member is either provided integrally with the actuator or, the valve member is provided separately from the actuator and is connected to the actuator.

3. A pressure swing adsorption system as claimed in either of claims 1 or 2, in which the actuator includes a piston, and a bore (866) in which the piston can slide between a retracted position which it occupies when the valve member is in its closed position and an extended position in which it engages the valve member to displace it from the port, and in which the piston defines the valve member.

4. A pressure swing adsorption system as claimed in claim 3, in which the piston comprises a part defining the actuator and a part defining the valve member.

5. A pressure swing adsorption system as claimed in claim 4, in which the part of the piston defining the actuator is a first part (868), and the part of the piston defining the valve member is a second part (869), the first part describing a first diameter, and the second part describing a second diameter which is less than the first diameter.

6. A pressure swing adsorption system as claimed in claim 5, in which a portion of the second part of the piston defines a valve face (871) and the housing defines a valve seat (873), the valve face of the piston adapted to sealingly abut the valve seat when the valve member is in its closed position.

7. A pressure swing adsorption system as claimed in any preceding claim, in which the actuator includes a piston, and a bore in which the piston can slide between a retracted position which it occupies when the valve member is in its closed position and an extended position in which it engages the valve member to displace it from the port.

8. A pressure swing adsorption system as claimed in claim 7, in which the actuator includes a channel (872) for supply of a first pilot stream of fluid to the piston to cause the piston to be displaced from its retracted position towards its extended position.

9. A pressure swing adsorption system as claimed in claim 8, in which the actuator includes a channel (874) for supply of a second pilot stream of fluid to the piston to cause the piston to be displaced from its extended position towards its retracted position.

10. A pressure swing adsorption system as claimed in claim 1, or any one of claims 8 to 10 when dependent on claim 1, in which the valve member is an approximately spherical body (462).

11. A pressure swing adsorption system as claimed in claim 10, in which the surface of the valve member is formed from a resiliently deformable material.

12. A pressure swing adsorption system as claimed in claim 1, or any one of claims 7 to 11 when dependent on claim 1, in which the cavity in the housing has first and second ports for the valve member, for fluid to flow between the cavity and the first chamber and between the cavity and the second chamber respectively, and in which the valve member can move between (i) a first closed position in which it engages the first port, (ii) a second closed position in which it engages the second port, and (iii) an open position in which the valve member is displaced from both of the first and second ports.

13. A pressure swing adsorption system as claimed in any preceding claim, in which the re-pressurisation control valve includes a first valve member which, when in its closed position, restricts flow of fluid between the cavity and the first chamber, and a second valve member which, when in is closed position, restricts flow of fluid between the cavity and the second chamber.

14. A pressure swing adsorption system as claimed in claim 13, in which the actuator includes a first piston (264) and a first bore which the first piston can slide in between a retracted position which it occupies when the first valve member is in its closed position and an extended position in which it engages the first valve member to displace it from its port, and a second piston (264) and a second bore which the second piston can slide in between a retracted position which it occupies when the second valve member is in its closed position and an extended position in which it engages the second valve member to displace it from its port.

15. A pressure swing adsorption system as claimed in claim 14, in which the actuator includes a channel for supply of a first pilot stream of fluid to the first and second pistons to cause the first and second pistons to be displaced from their retracted positions towards their extended positions.

## Patentansprüche

1. Druckwechseladsorptionssystem, das eine erste und eine zweite Kammer (110, 112) umfasst, die jeweils ein Adsorptionsmedium enthalten, wobei, wenn das System in Betrieb ist, ein Fluid zum Fließen über das Adsorptionsmedium in einer der Kammern (die "Online-Kammer") geleitet wird, um Verunreinigungen in dem Fluid zu adsorbieren, während das Adsorptionsmedium in der anderen Kammer durch Desorption der adsorbierten Verunreinigungen (die "Regenerationskammer") regeneriert wird, wobei das System umfasst:
a. eine Spülleitung, die sich zwischen der ersten und der zweiten Kammer erstreckt, um, wenn das System in Betrieb ist, das Fluid von der Online-Kammer in die Regenerationskammer zuzuführen, wobei die Spülleitung einen Durchflussbegrenzer (160) zur Steuerung des Fluidvolumens, das, wenn das System in Betrieb ist, durch die Spülleitung fließen kann, enthält, wobei der Spülstrom durch einen Auslass (162), der durch ein Auslassventil (164) gesteuert wird, in die Atmosphäre entlüftet wird, wobei das Auslassventil mittels einer Kolben- und Zylinderanordnung gesteuert wird, wobei die Position des Kolbens in dem Zylinder mittels eines Durchflusses eines Pilotgases gesteuert wird;
b. einen Wiederbeaufschlagungsweg (167), der sich zwischen der ersten und der zweiten Kammer erstreckt, um, wenn das System in Betrieb ist, das Fluid von der Online-Kammer in die Regenerationskammer zuzuführen, wobei der Durchflussbegrenzer in der Spülleitung umgangen wird,
c. ein Wiederbeaufschlagungssteuerventil (168) zum Steuern des Durchflusses des Fluids in dem Wiederbeaufschlagungsweg, das ein Gehäuse (850), das einen Hohlraum darin mit einer Öffnung (854a, 856a) für den Durchfluss des Fluids entlang des Wiederbeaufschlagungswegs hat, und ein Ventilelement (864), das sich in dem Hohlraum zwischen (i) einer geschlossenen Position, in der das Ventilelement mit der Öffnung in Eingriff steht und den Durchfluss des Fluids durch den Wiederbeaufschlagungsweg begrenzt, und (ii) einer offenen Position, in der das Ventilelement von der Öffnung verschoben ist und den Durchfluss des Fluids durch den Wiederbeaufschlagungsweg ermöglicht, bewegen kann, aufweist, und
d. einen Aktuator (864), der auf das Ventilelement einwirken kann, um es aus seiner geschlossenen Position zu bewegen;
e. **dadurch gekennzeichnet, dass** das Wiederbeaufschlagungssteuerventil mit der Kolben- und Zylinderanordnung des Auslassventils mittels des Durchflusses des Pilotgases so gesteuert wird, dass das Auslassventil geschlossen ist, wenn sich das Wiederbeaufschlagungssteuerventil in seiner offenen Position befindet, die es dem Gas ermöglicht, den Durchflussbegrenzer zu umgehen, und dass das Auslassventil offen ist, wenn sich das Wiederbeaufschlagungssteuerventil in seiner geschlossenen Position befindet, die verhindert, dass das Gas den Durchflussbegrenzer umgeht.

2. Druckwechseladsorptionssystem nach Anspruch 1, wobei das Ventilelement entweder integral mit dem Aktuator vorgesehen ist oder das Ventilelement getrennt von dem Aktuator vorgesehen ist und mit dem Aktuator verbunden ist.

3. Druckwechseladsorptionssystem nach einem der Ansprüche 1 oder 2, wobei der Aktuator einen Kolben und eine Bohrung (866), in der der Kolben zwischen einer eingefahrenen Position, die er einnimmt, wenn sich das Ventilelement in seiner geschlossenen Position befindet, und einer ausgefahrenen Position, in der er mit dem Ventilelement in Eingriff steht, um es aus der Öffnung zu verschieben, und in der der Kolben das Ventilelement definiert, gleiten kann, aufweist.

4. Druckwechseladsorptionssystem nach Anspruch 3, wobei der Kolben einen Teil, der den Aktuator definiert, und einen Teil, der das Ventilelement definiert, aufweist.

5. Druckwechseladsorptionssystem nach Anspruch 4, wobei der Teil des Kolbens, der den Aktuator definiert, ein erster Teil (868) ist und der Teil des Kolbens, der das Ventilelement definiert, ein zweiter Teil (869) ist, wobei der erste Teil einen ersten Durchmesser beschreibt und der zweite Teil einen zweiten Durchmesser beschreibt, der kleiner als der erste Durchmesser ist.

6. Druckwechseladsorptionssystem nach Anspruch 5, wobei ein Abschnitt des zweiten Teils des Kolbens eine Ventilfläche (871) definiert und das Gehäuse einen Ventilsitz (873) definiert, wobei die Ventilfläche des Kolbens so angepasst ist, dass sie dichtend an dem Ventilsitz anliegt, wenn sich das Ventilelement in seiner geschlossenen Position befindet.

7. Druckwechseladsorptionssystem nach einem der vorhergehenden Ansprüche, wobei der Aktuator einen Kolben und eine Bohrung aufweist, in der der Kolben zwischen einer eingefahrenen Position, die er einnimmt, wenn sich das Ventilelement in seiner geschlossenen Position befindet, und einer ausgefahrenen Position, in der er mit dem Ventilelement in Eingriff steht, um es aus der Öffnung zu verschieben, gleiten kann.

8. Druckwechseladsorptionssystem nach Anspruch 7, wobei der Aktuator einen Kanal (872) für die Bereitstellung eines ersten Pilotstroms des Fluids zu dem Kolben umfasst, um zu bewirken, dass der Kolben aus seiner eingefahrenen Position in seine ausgefahrene Position verschoben wird.

9. Druckwechseladsorptionssystem nach Anspruch 8, wobei der Aktuator einen Kanal (874) für die Bereitstellung eines zweiten Pilotstroms des Fluids zu dem Kolben umfasst, um zu bewirken, dass der Kolben aus seiner ausgefahrenen Position in seine eingezogene Position verschoben wird.

10. Druckwechseladsorptionssystem nach Anspruch 1 oder einem der Ansprüche 8 bis 10, sofern abhängig von Anspruch 1, wobei das Ventilelement ein annähernd kugelförmiger Körper (462) ist.

11. Druckwechseladsorptionssystem nach Anspruch 10, wobei die Oberfläche des Ventilelements aus einem elastisch verformbaren Material gebildet ist.

12. Druckwechseladsorptionssystem nach Anspruch 1 oder nach einem der Ansprüche 7 bis 11 sofern abhängig von Anspruch 1, wobei der Hohlraum im Gehäuse eine erste und eine zweite Öffnung für das Ventilelement hat, damit das Fluid entsprechend zwischen dem Hohlraum und der ersten Kammer und zwischen dem Hohlraum und der zweiten Kammer fließen kann, und wobei sich das Ventilelement zwischen (i) einer ersten geschlossenen Position, in der es mit der ersten Öffnung in Eingriff steht, (ii) einer zweiten geschlossenen Position, in der es mit der zweiten Öffnung in Eingriff steht, und (iii) einer offenen Position, in der das Ventilelement sowohl von der ersten als auch von der zweiten Öffnung verschoben ist, bewegen kann.

13. Druckwechseladsorptionssystem nach einem der vorhergehenden Ansprüche, wobei das Wiederbeaufschlagungssteuerventil ein erstes Ventilelement, das in seiner geschlossenen Position den Durchfluss des Fluids zwischen dem Hohlraum und der ersten Kammer begrenzt, und ein zweites Ventilelement, das in seiner geschlossenen Position den Durchfluss des Fluids zwischen dem Hohlraum und der zweiten Kammer begrenzt, umfasst.

14. Druckwechseladsorptionssystem nach Anspruch 13, wobei der Aktuator einen ersten Kolben (264) und eine erste Bohrung, in der der erste Kolben zwischen einer eingefahrenen Position, die er einnimmt, wenn sich das erste Ventilelement in seiner geschlossenen Position befindet, und einer ausgefahrenen Position, in der er mit dem ersten Ventilelement in Eingriff steht, um es aus seiner Öffnung zu verschieben, gleiten kann, und einen zweiten Kolben (264) und eine zweite Bohrung, in der der zweite Kolben zwischen einer eingefahrenen Position, die er einnimmt, wenn sich das zweite Ventilelement in seiner geschlossenen Position befindet, und einer ausgefahrenen Position, in der er mit dem zweiten Ventilelement in Eingriff steht, um es aus seiner Öffnung zu verschieben, gleiten kann, umfasst.

15. Druckwechseladsorptionssystem nach Anspruch 14, wobei der Aktuator einen Kanal für die Bereitstellung eines ersten Pilotstroms des Fluids zu dem ersten und dem zweiten Kolben umfasst, um zu bewirken, dass der erste und der zweite Kolben aus ihren eingefahrenen Positionen in ihre ausgefahrenen Positionen verschoben werden.

## Revendications

1. Système d'adsorption modulée en pression qui comprend des première et deuxième chambres (110, 112), chacune contenant un milieu d'adsorption, dans lequel, lorsque le système est en cours d'utilisation, un fluide est dirigé pour s'écouler sur le milieu d'adsorption dans l'une des chambres (la « chambre en ligne ») afin d'adsorber les contaminants dans le fluide tandis que le milieu d'adsorption dans l'autre des chambres est régénéré par désorption des contaminants adsorbés (la « chambre de régénération »), le système comprenant :
a. un conduit de purge qui s'étend entre les première et deuxième chambres pour délivrer un fluide, lorsque le système est en cours d'utilisation, de la chambre en ligne à la chambre de régénération, le conduit de purge contenant un limiteur de débit (160) pour commander le volume de fluide qui peut s'écouler à travers le conduit de purge lorsque le système est en cours d'utilisation, dans lequel le courant de purge est évacué vers l'atmosphère par un échappement (162), commandé par une vanne d'échappement (164), la vanne d'échappement étant commandée au moyen d'un agencement à piston et cylindre, où la position du piston dans le cylindre est commandée au moyen d'un flux de gaz pilote ;
b. un trajet de repressurisation (167) qui s'étend entre les première et deuxième chambres pour délivrer un fluide, lorsque le système est en cours d'utilisation, de la chambre en ligne à la chambre de régénération, en contournant le limiteur de débit dans le conduit de purge,
c. une vanne de commande de repressurisation (168) pour commander l'écoulement de fluide dans le trajet de repressurisation, qui comprend un boîtier (850) ayant à l'intérieur une cavité avec un orifice (854a, 856a) pour l'écoulement de fluide le long du trajet de repressurisation et un élément de vanne (864) qui peut se déplacer dans la cavité entre (1) une position fermée dans laquelle l'élément de vanne s'engage dans l'orifice et limite l'écoulement de fluide à travers le trajet de repressurisation et (ii) une position ouverte dans laquelle l'élément de vanne est déplacé depuis l'orifice permettant l'écoulement de fluide à travers le trajet de repressurisation, et
d. un actionneur (864) qui peut agir sur l'élément de vanne pour le déplacer de sa position fermée ;
e. **caractérisé en ce que** la vanne de commande de repressurisation est commandée à l'aide de l'agencement à piston et cylindre de la vanne d'échappement au moyen du flux de gaz pilote de sorte que lorsque la vanne de commande de repressurisation est dans sa position ouverte, elle permet au gaz de contourner le limiteur de débit, la vanne d'échappement est fermée et lorsque la vanne de commande de repressurisation est dans sa position fermée, elle empêche le gaz de contourner le limiteur de débit, la vanne d'échappement est ouverte.

2. Système d'adsorption modulée en pression tel que revendiqué dans la revendication 1, dans lequel l'élément de vanne est soit fourni d'un seul tenant avec l'actionneur, soit l'élément de vanne est fourni séparément de l'actionneur et est relié à l'actionneur.

3. Système d'adsorption modulée en pression tel que revendiqué dans l'une des revendications 1 et 2, dans lequel l'actionneur comprend un piston, et un alésage (866) dans lequel le piston peut coulisser entre une position rétractée qu'il occupe lorsque l'élément de vanne est dans sa position fermée et une position étendue dans laquelle il s'engage avec l'élément de vanne pour le déplacer hors de l'orifice, et dans lequel le piston définit l'élément de vanne.

4. Système d'adsorption modulée en pression tel que revendiqué dans la revendication 3, dans lequel le piston comprend une partie définissant l'actionneur et une partie définissant l'élément de vanne.

5. Système d'adsorption modulée en pression tel que revendiqué dans la revendication 4, dans lequel la partie du piston définissant l'actionneur est une première partie (868), et la partie du piston définissant l'élément de vanne est une deuxième partie (869), la première partie décrivant un premier diamètre, et la deuxième partie décrivant un deuxième diamètre qui est inférieur au premier diamètre.

6. Système d'adsorption modulée en pression tel que revendiqué dans la revendication 5, dans lequel une portion de la deuxième partie du piston définit une face de vanne (871) et le boîtier définit un siège de vanne (873), la face de vanne du piston étant adaptée pour venir en butée de manière étanche contre le siège de vanne lorsque l'élément de vanne est dans sa position fermée.

7. Système d'adsorption modulée en pression tel que revendiqué dans l'une des revendications précédentes, dans lequel l'actionneur comprend un piston, et un alésage dans lequel le piston peut coulisser entre une position rétractée qu'il occupe lorsque l'élément de vanne est dans sa position fermée et une position étendue dans laquelle il s'engage avec l'élément de vanne pour le déplacer hors de l'orifice.

8. Système d'adsorption modulée en pression tel que revendiqué dans la revendication 7, dans lequel l'actionneur comprend un canal (872) pour la fourniture d'un premier courant pilote de fluide au piston afin de provoquer le déplacement du piston de sa position rétractée vers sa position étendue.

9. Système d'adsorption modulée en pression tel que revendiqué dans la revendication 8, dans lequel l'actionneur comprend un canal (874) pour la fourniture d'un deuxième courant pilote de fluide au piston afin de provoquer le déplacement du piston de sa position étendue vers sa position rétractée.

10. Système d'adsorption modulée en pression tel que revendiqué dans la revendication 1, ou l'une quelconque des revendications 8 à 10 lorsqu'elles dépendent de la revendication 1, dans lequel l'élément de vanne est un corps approximativement sphérique (462).

11. Système d'adsorption modulée en pression tel que revendiqué dans la revendication 10, dans lequel la surface de l'élément de vanne est formée d'un matériau élastiquement déformable.

12. Système d'adsorption modulée en pression tel que revendiqué dans la revendication 1, ou l'une quelconque des revendications 7 à 11 lorsqu'elles dépendent de la revendication 1, dans lequel la cavité dans le boîtier a des premier et deuxième orifices pour l'élément de vanne, pour que le fluide s'écoule entre la cavité et la première chambre et entre la cavité et la deuxième chambre respectivement, et dans lequel l'élément de vanne peut se déplacer entre (i) une première position fermée dans laquelle il s'engage dans le premier orifice, (ii) une deuxième position fermée dans laquelle il s'engage dans le deuxième orifice, et (iii) une position ouverte dans laquelle l'élément de vanne est déplacé à la fois des premier et deuxième orifices.

13. Système d'adsorption modulée en pression tel que revendiqué dans l'une des revendications précédentes, dans lequel la vanne de commande de repressurisation comprend un premier élément de vanne qui, lorsqu'il est dans sa position fermée, limite l'écoulement de fluide entre la cavité et la première chambre, et un deuxième élément de vanne qui, lorsqu'il est dans sa position fermée, limite l'écoulement de fluide entre la cavité et la deuxième chambre.

14. Système d'adsorption modulée en pression tel que revendiqué dans la revendication 13, dans lequel l'actionneur comprend un premier piston (264) et un premier alésage dans lequel le premier piston peut coulisser entre une position rétractée qu'il occupe lorsque le premier élément de vanne est dans sa position fermée et une position étendue dans laquelle il s'engage avec le premier élément de vanne pour le déplacer hors de son orifice, et un deuxième piston (264) et un deuxième alésage dans lequel le deuxième piston peut coulisser entre une position rétractée qu'il occupe lorsque le deuxième élément de vanne est dans sa position fermée et une position étendue dans laquelle il s'engage avec le deuxième élément de vanne pour le déplacer hors de son orifice.

15. Système d'adsorption modulée en pression tel que revendiqué dans la revendication 14, dans lequel l'actionneur comprend un canal pour la fourniture d'un premier courant pilote de fluide aux premier et deuxième pistons afin de provoquer le déplacement des premier et deuxième pistons de leurs positions rétractées vers leurs positions étendues.
